# FASCICULE DE BREVET EUROPEEN

(11) **EP 2 681 873 B1**
(45) Date de publication et mention de la délivrance du brevet: **30.05.2018**
(21) Numéro de dépôt: 12701883.6
(22) Date de dépôt: 27.01.2012
(51) Int. Cl.: H04L 29/08, H04W 8/00, H04W 64/00, H04L 29/12, H04L 12/28

(54) **PROCÉDÉ ET SYSTÈME DE COMMUNICATION ENTRE UN PREMIER ÉQUIPEMENT ET UN OU PLUSIEURS AUTRES ÉQUIPEMENTS**
VERFAHREN UND SYSTEM ZUR KOMMUNIKATION ZWISCHEN EINER ERSTEN ANLAGE UND EINER ODER MEHREREN ANDEREN ANLAGEN
METHOD AND SYSTEM FOR COMMUNICATING BETWEEN A FIRST EQUIPMENT AND ONE OR MORE OTHER EQUIPMENTS

(30) Priorité: 28.02.2011 FR 1151596
(43) Date de publication de la demande: 08.01.2014
(73) Titulaire: Schneider Electric Industries SAS, 92500 Rueil-Malmaison (FR)
(72) Inventeur: GASSION, Romain, F-38140 Izeaux (FR); CHICHE, Thierry, F-38330 Saint Ismier (FR)
(74) Mandataire: Dufresne, Thierry
(86) Numéro de dépôt international: PCT/EP2012/051282
(87) Numéro de publication internationale: WO 2012/116861

(56) Documents cités:
- IMIELINSKI J NAVAS RUTGERS UNIVERSITY T: "GPS-Based Addressing and Routing; rfc2009.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/, INTERNET ENGINEERING TASK FORCE, IETF, CH, 1 novembre 1996 (1996-11-01), XP015007793, ISSN: 0000-0003

## Description

La présente invention se rapporte à un procédé et un système de communication entre un premier équipement et un ou plusieurs autres équipements. L'invention concerne également un équipement employé dans ce système de communication.

Pour certaines applications comme par exemple la commande de lumières, il est de plus en plus courant de recourir à la technologie sans fil. La commande de lumière par liaison sans fil est réalisée grâce à un émetteur communiquant avec un récepteur doté d'une sortie pour envoyer l'ordre d'allumage à une lampe. Pour communiquer, l'émetteur doit être connu du récepteur. Un procédé de couplage entre l'émetteur et le récepteur doit donc être mis en oeuvre avant l'utilisation normale de l'ensemble émetteur/récepteur. Si un même émetteur est associé à plusieurs récepteurs, pour par exemple commander plusieurs lampes, un couplage doit être réalisé entre chaque récepteur et l'émetteur. Les solutions de l'art antérieur ne sont pas satisfaisantes car elles nécessitent toujours de mettre en oeuvre une procédure de couplage particulière, chaque nouveau récepteur devant être couplé à l'émetteur.

Il est connu de la publication, intitulée "GPS-Based Addressing an Routing" par T. IMIELINSKI, J. NAVAS, un protocole permettant d'envoyer un message à plusieurs équipements en même temps en définissant une zone géographique incluant lesdits équipements. Tous les équipements inclus dans la zone définie par des coordonnées géographiques sont destinataires du message. Cette solution permet ainsi de pouvoir aisément envoyer un message à plusieurs équipements en même temps, sans connaître l'adresse IP individuelle de chacun des équipements.

Dans cette publication, les coordonnées géographiques sont employées pour définir une zone d'émission d'un message. L'envoi du message est cependant réalisé dans le cadre d'un réseau fonctionnant selon un protocole IP (Internet Protocol) et ne permet donc pas de communiquer directement avec un équipement sans la connaissance de l'adresse IP de cet équipement. De plus lors du remplacement d'un équipement, un paramétrage de l'adresse IP du nouvel équipement doit être effectué pour que cet équipement soit reconnu sur le réseau.

Le but de l'invention est de proposer un procédé et un système de communication entre un premier équipement et un ou plusieurs autres équipements dans lesquels aucune procédure de couplage particulière ne doit être menée et qui permet un adressage facile de chaque équipement. Le but de l'invention est également de proposer un équipement employé dans ce procédé et ce système de communication.

Ce but est atteint par un procédé de communication selon l'invention tel que défini par la revendication 1. Chaque équipement est identifié sur ledit réseau de communication par un identifiant basé sur ses coordonnées géographiques, le procédé comportant une étape d'envoi d'un message par le premier équipement à chaque équipement destinataire, ledit message étant conforme à un protocole de communication déterminé et comportant une première information définissant une zone d'influence correspondant à une zone géographique déterminée par rapport à laquelle chaque équipement destinataire détermine s'il est concerné par ledit message.

Selon l'invention, chaque équipement est ainsi identifié sur le réseau par un identifiant basé sur ses coordonnées géographiques. De cette manière, cet identifiant est automatiquement paramétré sur l'équipement ce qui lui permet de se connecter automatiquement au réseau, sans paramétrage. De plus, en cas de changement de position géographique, l'équipement met automatiquement son identifiant à jour en tenant compte de cette nouvelle position géographique. Enfin, en cas de remplacement d'un équipement, le nouvel équipement reprend automatiquement le même identifiant, ceci de manière transparente pour les autres équipements du réseau. Les revendications dépendantes définissent des modes de réalisation.

Selon une mode de réalisation, la zone d'influence est paramétrée par sa forme et sa taille.

Selon un autre mode de réalisation, la première information du message comporte un attribut lié à une incertitude de position par rapport à la zone d'influence.

Selon un autre mode de réalisation, la première information du message comporte un attribut lié à une orientation d'un équipement par rapport à la zone d'influence.

Selon un autre mode de réalisation, la première information du message comporte un attribut lié à une orientation d'un équipement par rapport à la zone d'influence.

Selon un autre mode de réalisation, le message comporte une deuxième information liée à un point déterminé dans l'espace par rapport auquel chaque équipement destinataire du message détermine s'il est concerné par ledit message.

Selon un autre mode de réalisation, le message comporte une troisième information correspondant à un angle de déviation par rapport aux orientations pointant sur le point déterminé dans l'espace.

Selon un autre mode de réalisation, le protocole de communication comporte une fonction de découverte des équipements présents dans la zone d'influence.

L'invention est également définie par la revendication 9 comme portant sur un système de communication. Ce système est considéré comme parfaitement adapté pour mettre en oeuvre le procédé décrit ci-dessus.

Selon un mode de réalisation, l'identifiant de chaque équipement comporte une information correspondant au type d'équipement.

Selon un autre mode de réalisation, le premier équipement comporte des moyens de configuration de sa zone d'influence. Ces moyens de configuration comportent par exemple des moyens de dialogue homme machine situés sur l'équipement ou connectables à l'équipement.

Selon un autre mode de réalisation, la zone d'influence est paramétrée par sa forme et sa taille.

D'autres caractéristiques et avantages vont apparaître dans la description détaillée qui suit en se référant à un mode de réalisation donné à titre d'exemple et représenté par les dessins annexés sur lesquels :
- la figure 1 représente un système de communication conforme à un mode de réalisation l'invention, comportant un premier équipement émetteur de messages et plusieurs autres équipements destinataires des messages,
- la figure 2 représente le principe de sélection des équipements par rapport à une zone d'influence,
- les figures 3, 4 et 5 illustrent les principes de fonctionnement des messages "multicast1", "multicast2" et "multicast3".

L'invention concerne un système de communication comportant plusieurs équipements DEV communiquant entre eux à travers un réseau de communication 30 en utilisant chacun un identifiant ID1, ID2, ID3, ID4, ID5, ID6 (désigné ci-après ID) leur permettant de s'identifier sur le réseau de communication 30. Le système de communication pourra par exemple être mis en place sur un réseau de communication sans fil ou filaire.

Dans la suite de la description, le terme "équipement" sera employé pour désigner un équipement émetteur de message, un équipement récepteur de message ou un équipement émetteur/récepteur de message. Dans la suite de la description, il faut également considérer qu'un équipement pourra comporter plusieurs éléments répartis tels que par exemple un contacteur électromécanique logé dans une armoire et un moteur électrique. De plus, si plusieurs équipements comportent un élément commun, on pourra considérer chaque couple qui comporte l'élément commun comme un équipement distinct. Ce sera par exemple le cas pour un contacteur électromécanique destiné à commander plusieurs moteurs électriques.

Selon l'invention, chaque équipement DEV est identifié sur le réseau de communication 30 par ses coordonnées géographiques. Ainsi, lorsqu'un équipement DEV est ajouté sur le réseau de communication 30, il détermine son identifiant ID basé sur ses coordonnées géographiques. Toute communication entre les équipements DEV sur le réseau de communication 30 repose sur les identifiants ID basés sur les coordonnées géographiques. Lorsque l'équipement comporte plusieurs éléments répartis, ses coordonnées géographiques seront celles de l'un de ses éléments, c'est-à-dire par exemple celles du moteur électrique et non celles du contacteur qui permet de commander ce moteur électrique.

Selon l'invention, un protocole de communication particulier permet aux équipements DEV de communiquer sur le réseau de communication 30. Ce protocole de communication est un protocole réseau susceptible d'être implémenté en tant que nouveau protocole ou de s'additionner à des protocoles, par exemple de type IP, ZIGBEE, LON, sur des réseaux existants.

Selon l'invention, l'identifiant ID d'un équipement DEV sur le réseau de communication 30 se compose de trois informations distinctes :
- sa position géographique de référence notée *DevPos (DevX, DevY, DevZ),*
- le type de l'équipement noté *DevType,*
- un numéro d'instance noté *DevInst.*

La position géographique de référence *DevPos* correspond à la position physique de l'équipement. Elle peut être déterminée à l'aide d'une puce GPS implantée dans l'équipement ou paramétrée à l'aide d'un dispositif externe connecté à l'équipement. Bien entendu toute autre solution permettant de détecter la position géographique de l'équipement peut être employée.

L'information de type d'équipement *DevType* permet de différencier des équipements entre eux sur le réseau, par exemple différents types d'équipements récepteurs entre eux par rapport à un équipement émetteur commun. Un capteur de température est différent d'un détecteur de présence ou d'une lampe.

Le numéro d'instance *DevInst* permet pour sa part de différencier de manière unique les équipements de même type connectés au réseau et possédant une même position géographique de référence. Pour un équipement non connecté à un réseau ou lorsque le numéro d'instance n'a pas encore été attribué, ce numéro d'instance prend par défaut la valeur zéro.

L'identifiant complet noté ID se formule ainsi de la manière suivante :
*ID=DevPos(DevX, Devy, DevZ), DevType, DevInst*

Par ailleurs, chaque équipement connecté au réseau de communication possède certaines propriétés lui permettant de se maintenir à jour sur le réseau de communication 30. Ces propriétés sont stockées dans la mémoire de l'équipement et sont les suivantes :
- sa position géographique instantanée notée *CurPos (CurX, CurY, CurZ)*
- la durée depuis la dernière mise à jour de son identifiant notée *IDAssign Time,*
- la précision sur sa position géographique notée *LocAcc.*

La position instantanée *CurPos* correspond à la dernière position géographique qui a été détectée ou saisie pour l'équipement. Lors de l'initialisation d'un équipement DEV, sa position instantanée *CurPos* vaut par défaut sa position de référence *DevPos.*

Chaque équipement DEV stocke dans sa mémoire un paramètre décrivant l'incertitude de son positionnement notée *LocAcc.* Cette information paramétrable est employée pour déterminer si la position de référence *DevPos* de l'équipement doit être mise à jour lors d'un changement de position instantanée *CurPos* de l'équipement DEV. Si la différence entre la position géographique de référence *DevPos* et la position géographique instantanée *CurPos* est supérieure à l'incertitude de positionnement, alors la position géographique de référence *DevPos* doit être réinitialisée en étant remplacée par la position géographique instantanée *CurPos,* entraînant la modification de l'identifiant ID de l'équipement DEV.

Ainsi, chaque équipement peut facilement s'attribuer une adresse et la modifier, en fonction de sa position géographique. Si un équipement tombe en panne et doit être remplacé, le nouvel appareil, installé à la même position géographique, reprend donc le même identifiant. De cette manière, le remplacement de l'équipement est transparent pour les autres équipements du réseau et ne nécessite aucune configuration supplémentaire. De même, le déplacement d'un équipement d'un endroit à un autre entraînera automatiquement une modification de son identifiant de sorte qu'il sera considéré comme un nouvel équipement sur le réseau.

A partir de son identifiant ID et de ses propriétés, un équipement DEV peut communiquer avec un autre équipement DEV sur le réseau de communication 30 en utilisant des messages conformes au protocole de communication de l'invention.

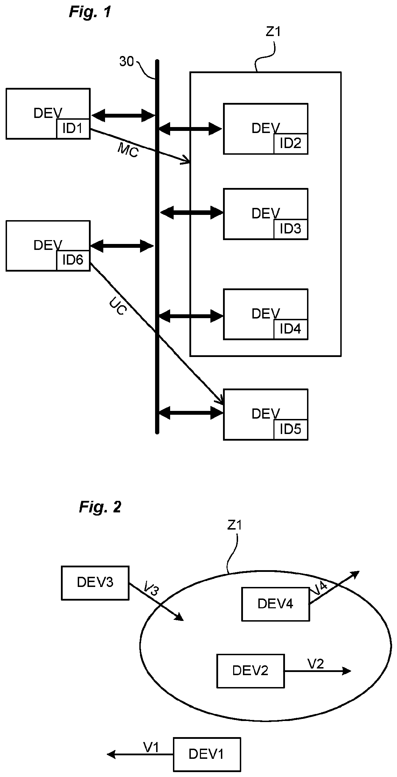

Il existe deux types de messages, les messages dits "unicast" (UC, figure 1) et les messages dits "multicast" (MC, figure 1).

Les messages "unicast" sont les messages émis par un équipement DEV à destination d'un et un seul autre équipement DEV. Les messages "unicast" ont la forme suivante : *<ID><ID><MessID><Mess>*

Dans laquelle :
- *ID* correspond à l'identifiant de l'équipement émetteur du message,
- *ID* correspond à l'identifiant de l'équipement destinataire du message,
- *MessID* correspond au type de message,
- Mess correspond au corps du message.

La figure 1 illustre l'envoi d'un message "unicast" (UC) par un équipement émetteur à destination d'un seul équipement récepteur connu de l'équipement émetteur à travers le réseau de communication 30.

Les messages "multicast" (MC) sont des messages émis par un équipement DEV à destination d'un ou plusieurs équipements DEV non adressés spécifiquement. Selon l'invention, ce type de message permet de s'adresser aux équipements situés dans une zone d'influence déterminée paramétrable sur l'équipement émetteur du message. Un message "multicast" se présente sous la forme suivante :
*<ID><AREA><MessID><Mess>*

Dans laquelle :
- *ID* correspond à l'identifiant de l'équipement émetteur,
- *AREA* définit une zone d'influence Z1 de l'équipement émetteur,
- *MessID* correspond au type de message,
- Mess correspond au corps du message.

Plus précisément, l'information *AREA* correspond à la zone d'influence Z1 (figure 1) de l'équipement émetteur du message et est définie par un type de forme géométrique dénommé *TypZ* et par des coordonnées géographiques de la forme géométrique dénommées *CoordZ.* Le type de forme géométrique *TypZ* peut prendre différents attributs tels que par exemple l'univers dans sa totalité ou toute forme géométrique tridimensionnelle connue telle que sphère, cône, cylindre ou même un point particulier dans l'espace si l'objectif est de chercher des équipements possédant les mêmes coordonnées géographiques. L'information *AREA* peut par exemple comporter aussi un attribut noté *Alea* et lié à une distance d'incertitude de la position géographique d'un équipement destinataire par rapport à la forme géométrique.

Par les messages "multicast", un premier équipement peut ainsi adresser un ou plusieurs autres équipements dans une zone d'influence Z1 déterminée correspondant à une zone géographique paramétrée dans le premier équipement. Cette zone d'influence Z1 sera par exemple une pièce d'un bâtiment. Un équipement DEV sera concerné par le message si sa position géographique instantanée ou de référence se trouve dans la zone d'influence de l'équipement émetteur. Un équipement émetteur d'un message pourra ainsi limiter sa communication avec des équipements destinataires d'un certain type présents dans une zone géographique déterminée définie par sa zone d'influence Z1. Les équipements destinataires ne répondant pas à ces critères n'entreront pas dans la communication. La figure 1 illustre le principe de l'invention dans lequel un équipement émetteur peut communiquer sur le réseau de communication 30 avec des équipements destinataires dont la position géographique instantanée ou de référence est située dans sa zone d'influence Z1. Les équipements destinataires qui ne sont pas situés dans la zone géographique Z1 ne sont pas concernés par les messages "multicast" envoyés par l'équipement émetteur du message.

Dans la suite de la description, il faut comprendre que la position géographique par rapport à laquelle un équipement destinataire d'un message décide s'il est concerné par le message peut être la position géographique de référence *DevPos* ou la position géographique instantanée *CurPos.* Les deux solutions peuvent être envisagées.

Selon une variante de réalisation de l'invention, l'identifiant de l'équipement DEV peut également comporter une information liée à son orientation dans l'espace. Par orientation, on entend une direction et un sens, ce qui signifie que l'orientation peut être représentée par un vecteur. Dans ce cas, l'identifiant ID de l'équipement comporte alors au total quatre informations, c'est-à-dire :
- sa position géographique de référence notée *DevPos (DevX, DevY, DevZ),*
- son orientation de référence notée *DevOri (DevPsi, DevPhy, DevTheta),*
- le type de l'équipement noté *DevType,*
- un numéro d'instance notée *DevInst.*

Les informations *DevPos, DevType* et *DevInst* sont identiques à celles définies précédemment. L'information *DevOri* correspond pour sa part à l'orientation de référence de l'équipement et se matérialise donc par un vecteur ayant une direction et un sens. L'orientation est par exemple déterminée à l'aide d'une capacité interne type gyroscope située à l'intérieur de l'équipement ou paramétrée à l'aide d'un dispositif externe connecté à l'équipement. Bien entendu toute autre solution permettant de détecter l'orientation de l'équipement peut être employée. Les trois attributs de l'orientation de référence notés *DevPsi, DevPhy, DevTheta* correspondent aux angles d'Euler et définissent respectivement l'azimut, l'élévation et le roulis. Selon cette variante de réalisation, l'identifiant complet ID se formule alors de la manière suivante :
*ID=DevPos(DevX, Devy, DevZ), DevOri(DevPsi, DevPhy, DevTheta), DevType, DevInst*

Comme cette variante de réalisation tient compte de l'orientation de l'équipement, les propriétés de l'équipement sont également modifiées. En plus des propriétés liées à la position géographique instantanée *CurPos,* à la durée depuis la dernière mise à jour de son identifiant notée *IDAssignTime* et à la précision de sa position notée *LocAcc,* qui ont déjà été décrites ci-dessus, les propriétés comportent l'orientation instantanée notée *CurOri* et la précision de l'orientation notée *OriAcc.*

L'orientation instantanée *CurOri* comporte les attributs *CurPsi, CurPhy, CurTheta* qui correspondent aux angles instantanés. L'orientation instantanée *CurOri* correspond à la dernière orientation géographique qui a été détectée ou saisie pour l'équipement. Lors de l'initialisation d'un équipement, son orientation instantanée *CurOri* vaut par défaut son orientation de référence *DevOri.*

Chaque équipement 10, 20 stocke également dans sa mémoire un paramètre décrivant l'incertitude de son orientation notée *OriAcc.* Cette information paramétrable est employée pour déterminer si l'orientation de référence *DevOri* de l'équipement doit être mise à jour lors d'un changement d'orientation instantanée *CurOri* de l'équipement. Si la différence entre l'orientation géographique de référence *DevOri* et l'orientation géographique instantanée *CurOri* est supérieure à l'incertitude de son orientation *OriAcc,* alors l'orientation de référence *DevOri* doit être réinitialisée en étant remplacée par l'orientation géographique instantanée *CurOri,* entraînant la modification de l'identifiant ID de l'équipement DEV.

Avec ce nouvel identifiant *ID* intégrant l'orientation de référence de l'équipement, les messages de type "unicast" et les messages de type "multicast" sont modifiés.

Les messages "unicast" sont toujours sous la forme *<ID><ID><MessID><Mess>.* Cependant l'identifiant de l'équipement émetteur et l'identifiant de l'équipement destinataire sont sous la forme :
*ID=DevPos(DevX, Devy, DevZ), DevOri(DevPsi, DevPhy, DevTheta), DevType, DevInst*

Ils intègrent donc la notion d'orientation de référence.

En ce qui concerne les messages "multicast", l'intégration de la notion d'orientation nécessite de définir différents types de messages, désignés "multicast1", "multicast2" et "multicast3".

Comme pour les messages "multicast" décrits précédemment, ces messages intègrent également la notion de zone d'influence notée *AREA.* En plus de l'attribut lié à la forme géométrique et noté *TypZ* et de l'attribut lié aux coordonnées de la forme géométrique et noté *CoordZ* pour la zone d'influence Z1, l'information *AREA* intègre un attribut noté *AleaZ* correspondant à une incertitude de positionnement de l'équipement suivant l'orientation de référence ou instantanée de l'équipement et un attribut noté *TreatZ*correspondant à la façon dont la position de l'équipement et son incertitude de positionnement doivent être interprétées par rapport à la zone d'influence Z1 définie par *TypZ* et *CoordZ.*

Le message "multicast1" permet de cibler tous les équipements qui remplissent les conditions de l'information *AREA* définie ci-dessus. Dans cette information *AREA,* le tableau ci-dessous définit par exemple pour chaque valeur prise par l'attribut *TreatZ,* les équipements qui sont concernés par le message "multicast1" reçu.

| TreatZ | DEV1 | DEV2 | DEV3 | DEV4 |
|---|---|---|---|---|
| 0 | N | N | N | N |
| 1 | N | Y | N | N |
| 2 | N | Y | N | Y |
| 3 | N | Y | Y | N |
| 4 | N | Y | Y | Y |
| 5 | Y | N | N | N |
| 6 | Y | N | Y | N |
| 7 | Y | N | N | Y |
| 8 | Y | N | Y | Y |
| 9 | Y | Y | Y | Y |

Dans ce tableau, les intitulés DEV1, DEV2, DEV3, DEV4 correspondent aux quatre situations possibles (figure 2) dans lesquelles un équipement peut se trouver par rapport à une zone d'influence Z1 définie par *TypZ* et *CoordZ.* Selon sa situation et la valeur prise par l'attribut *TreatZ,* l'équipement sera concerné par le message (lettre "Y" dans le tableau) ou pas concerné par le message (lettre "N" dans le tableau). La situation de chaque équipement peut en effet être représentée par un point de référence correspondant à sa position géographique de référence ou instantanée et un vecteur (V1, V2, V3, V4) ayant pour origine ledit point de référence, orienté selon l'orientation de référence ou instantanée de l'équipement et de norme égale à la valeur définie dans l'attribut *AleaZ* de l'information *AREA.* Ce vecteur est par exemple intitulé vecteur d'incertitude. Dans la suite de la description, il faut comprendre que l'orientation avec laquelle un équipement destinataire d'un message décide s'il est concerné par le message peut être son orientation de référence *DevOri* ou son orientation instantanée *CurOri.* Les deux solutions peuvent en effet être envisagées.

En référence à la figure 2, il existe ainsi quatre situations possibles :
- un équipement (DEV2) peut comporter une position géographique de référence ou instantanée se trouvant à l'intérieur de la zone d'influence et un vecteur d'incertitude V2 situé à l'intérieur de la zone d'influence Z1,
- un équipement (DEV4) peut comporter une position géographique de référence ou instantanée se trouvant à l'intérieur de la zone d'influence et un vecteur d'incertitude V4 pointant à l'extérieur de la zone d'influence Z1,
- un équipement (DEV3) peut comporter une position géographique de référence ou instantanée se trouvant à l'extérieur de la zone d'influence mais avec un vecteur d'incertitude V3 pointant à l'intérieur de la zone d'influence Z1,
- un équipement (DEV1) peut comporter une position géographique de référence ou instantanée se trouvant à l'extérieur de la zone d'influence avec un vecteur d'incertitude V1 pointant à l'extérieur de la zone d'influence Z1.

Un équipement destinataire se trouvant dans la zone d'influence Z1 définie par l'équipement émetteur dans son message "multicast1" peut ne pas être concerné par ce message si sa situation fait qu'il ne remplit pas les critères de la variable *TreatZ* définie pour l'information *AREA.*

Le message "multicastl" prend donc la forme suivante :
*<ID><AREA><MessID><Mess>*

Dans laquelle :
- *ID* correspond à l'identifiant de l'équipement émetteur,
- *AREA* définit la zone d'influence Z1 de l'équipement émetteur ainsi que l'attribut *AleaZ* et l'attribut *TreatZ,*
- *MessID* correspond au type de message,
- Mess correspond au corps du message.

Le message "multicast2" permet de cibler de manière plus approfondie les équipements remplissant les conditions de l'information *AREA.* Ce message permet en effet de cibler les équipements qui présentent une orientation de référence ou instantanée identique, à un angle d'incertitude près, à une orientation déterminée définie dans le message. Ce message "multicast2" prend donc la forme suivante :
*<ID><AREA><OriDet><AngDet><MessID><Mess>*

Dans laquelle :
- *ID* correspond à l'identifiant de l'équipement émetteur,
- *AREA* définit la zone d'influence Z1 de l'équipement émetteur ainsi que l'attribut *AleaZ* et l'attribut *TreatZ,*
- *OriDet* correspond à une orientation déterminée et comporte les attributs *Phy, Psi, Théta,*
- *AngDet* définit un angle d'incertitude sur l'orientation déterminée définie par *OriDet,*
- *MessID* correspond au type de message,
- Mess correspond au corps du message

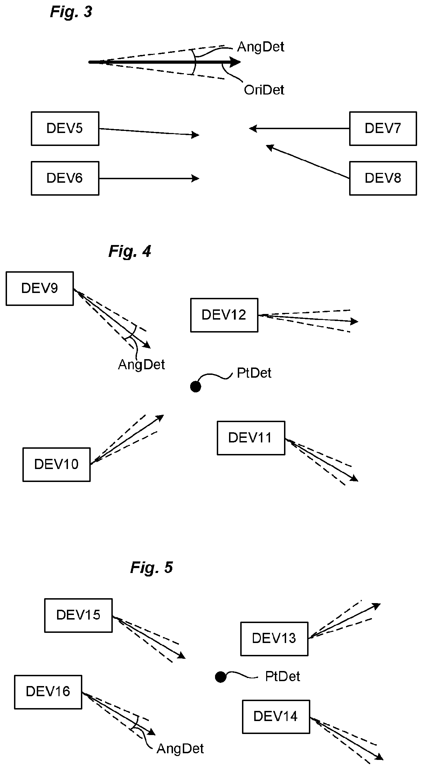

La figure 3 montre ainsi un vecteur définissant une orientation déterminée *OriDet* et une incertitude *AngDet* sur cette orientation. Les équipements dont l'orientation de référence *DevOri* ou instantanée *CurOri* suit l'orientation déterminée, à l'angle d'incertitude près, sont concernés par le message, sous réserve qu'ils remplissent les autres conditions, notamment leur position par rapport à la zone d'influence Z1. Sur la figure 3, il s'agit des équipements dénommés DEV5 et DEV6 mais pas des équipements DEV7 et DEV8.

Le message "multicast3" permet de cibler les équipements qui ont une orientation qui se définit, à un angle d'incertitude près, par rapport à un point déterminé dans l'espace et à un angle de déviation par rapport à ce point. Ce message "multicast3" prend donc la forme suivante :
*<ID><AREA><PtDet><AngDet><AngDev><MessID><Mess>*

Dans laquelle :
- *ID* correspond à l'identifiant de l'équipement émetteur,
- *AREA* définit la zone d'influence Z1 de l'équipement émetteur ainsi que l'attribut *AleaZ* et l'attribut *TreatZ,*
- *PtDet* correspond à un point déterminé dans l'espace et comporte des coordonnées géographiques (X, Y, Z),
- *AngDet* définit un angle d'incertitude pour l'orientation de référence *DevOri* de l'équipement,
- *AngDev* correspond à un angle de déviation par rapport à la direction pointant vers le point déterminé,
- *MessID* correspond au type de message,
- Mess correspond au corps du message.

La figure 4 montre ainsi un point déterminé *PtDet* et plusieurs équipements orientés par rapport à ce point. Les équipements dont l'orientation de référence *DevOri* ou instantanée *CurOri* pointe vers le point déterminé *PtDet* et suivent l'angle de déviation *AngDev,* à l'angle d'incertitude près, sont concernés par le message, sous réserve qu'ils remplissent les autres conditions, notamment leur position par rapport à la zone d'influence. Sur la figure 4, il s'agit des équipements dénommés DEV9 et DEV10 mais pas des équipements DEV11 et DEV12. Sur la figure 4, l'angle de déviation est fixé à 0 degré, ce qui signifie que le message concerne les équipements pointant sur le point déterminé. Sur la figure 5, l'angle de déviation est fixé à 180 degrés, ce qui signifie que le message est destiné à tous les équipements dont l'orientation de référence ou instantanée est à 180 degrés de l'orientation pointant sur le point déterminé. Sur la figure 5 il s'agit donc des équipements DEV13 et DEV14 mais pas des équipements DEV15 et DEV16.

Voici les différents messages qui peuvent être échangés entre deux équipements connectés au réseau de communication. Il existe des messages dits "systèmes" liés à la mise en place du système de communication ou dits "applicatifs" liés au fonctionnement du système de communication.

Les messages "systèmes" sont par exemple les suivants :
- *Discovery_Request* qui permet à un équipement de découvrir des équipements présents dans une zone d'influence définie,
- *Discovery_Ack* qui permet à un équipement de répondre à une demande de découverte,
- *Register_Request* qui permet à un équipement de rechercher un numéro d'instance libre,
- *Register_Noack* qui permet à un équipement de répondre que le numéro d'instance demandé est déjà alloué,
- *Registered* qui permet à un équipement d'informer un ou plusieurs autres équipements qu'il a validé son nouvel identifiant.

Le message *Discovery_Request* est un message "multicast" émis par un équipement pour rechercher d'autres équipements connectés dans une zone géographique définie. Il se présente sous la forme :
*Discovery_Request=<ID><AREA><IDDiscovery><type>*

Dans lequel :
- *ID* correspond à l'identifiant de l'équipement émetteur du message,
- *AREA* correspond à la zone géographique dans laquelle l'équipement émetteur souhaite faire sa recherche, cette zone pouvant être paramétrée sur l'équipement émetteur,
- *MessID=IDDiscovery* correspond au type du message de découverte des équipements présents dans la zone,
- *Mess=<type>* permet de spécifier le type d'équipements devant répondre au message. Il peut s'agir de tous les types d'équipements. Dans ce cas, la variable <type>=0.

Si nécessaire, le message peut également être de type "multicast1", "multicast2" ou "multicast3" si les équipements possèdent une information liée à leur orientation et si certains équipements sont ciblés par rapport à la zone d'influence.

Le message de réponse à un message de découverte *Discovery_Request* est de type "unicast", chaque équipement concerné par le message répondant à l'équipement émetteur du message de découverte. Ce message se présente sous la forme :
*Discovery_Ack=<ID><ID><IDDiscovery_Ack><Area><Curpos><LocAcc>*

Dans lequel :
- *ID* correspond à l'identifiant de l'équipement devant répondre au message *Discovery_Request,*
- *ID* correspond à l'identifiant de l'équipement émetteur du message *Discovery_Request*,
- *MessID=IDDiscovery_Ack* correspond au type du message permettant d'informer l'équipement émetteur qu'il est concerné par le message de découverte,
- *Mess=<AREA><CurPos><LocAcc>* permet à l'équipement d'informer l'équipement émetteur de sa position géographique instantanée et de la précision de sa position.

Le Message *Register_Request* permet à un équipement de rechercher un numéro d'instance libre en vue de valider son enregistrement. Ce message est de type "unicast" et permet de vérifier si un numéro d'instance déterminé est déjà pris. Le message *Register_Noack* est la réponse négative émise par un équipement en réponse au message *Register_Request.* Il s'agit d'un message de type "unicast".

Le message *Registered* correspond au message émis par un équipement pour confirmer l'enregistrement de son identifiant.

Un nouvel équipement qui se connecte sur le réseau de communication génère son identifiant en déterminant sa position géographique de référence *DevPos.* Initialement, son identifiant comporte par défaut un numéro d'instance nul. Il doit donc déterminer son numéro d'instance en procédant de la manière suivante :
- L'équipement scanne les instances allant de 1 à n des équipements du même type ayant la même position de référence en employant le message de type "unicast" dénommé *Register_Request*,
- Chaque équipement concerné par le numéro d'instance émis doit répondre avec un message *Register_Noack* permettant de signaler que le numéro d'instance est déjà alloué,
- Lorsqu'un message *Register_Request* ne trouve pas de réponse, l'équipement choisit le numéro d'instance correspondant au dernier message qu'il a émis,
- L'équipement émet ensuite un message de type "unicast" *Registered* pour informer chaque équipement de son nouvel identifiant.

Cette procédure ci-dessus est également suivie par un équipement lorsque celui-ci doit renouveler son identifiant ID lors de la réception d'un message applicatif de renouvellement ou lorsque la différence entre la position géographique instantanée *CurPos* de l'équipement et sa position géographique de référence *DevPos* devient supérieure à son incertitude de positionnement *LocAcc.*

Le protocole de communication permet également de gérer les conflits d'adresses entre équipements. En effet, plusieurs équipements peuvent posséder au même instant un même identifiant, y compris un même numéro d'instance. C'est par exemple le cas lorsque plusieurs équipements ayant les mêmes coordonnées géographiques se connectent au réseau de communication et souhaitent s'enregistrer en même temps. A cet instant, ils possèdent donc tous le même numéro d'instance qui vaut zéro. C'est également le cas lorsque par exemple un équipement se déconnecte du réseau de communication puis se reconnecte avec le même identifiant alors qu'entre-temps, un autre équipement s'est enregistré sur le réseau avec ce même identifiant. Ces conflits sont résolus de manière classique par des mécanismes d'auto-configuration d'adresses.

Par ailleurs, il existe également des messages "applicatifs" tels que décrits ci-dessous :
Le message dénommé *Wo_Move* permet à un équipement émetteur du message de savoir quels équipements connectés au réseau dans une zone déterminée se sont déplacés et depuis quand ils se sont déplacés. Ce message est de type "multicast". Le message dénommé *Wo_Move_Ack* est la réponse au message *Wo_Move.* Ce message est de type "unicast". Comme pour le message *DiscoveryRequest*, le message *Wo_Move* peut être de type "multicast1", "multicast2" ou "multicast3" si les équipements possèdent une information liée à leur orientation et si certains équipements sont ciblés par rapport à la zone d'influence.

Le protocole de communication décrit ci-dessus employant des identifiants ID basés sur les coordonnées géographiques pourra être implémenté pour différents types d'application. Il présente l'avantage de ne nécessiter aucune configuration particulière des équipements, hormis la ou les zones d'influence d'un équipement émetteur et éventuellement la prise en compte du tableau ci-dessus définissant les différentes valeurs de l'attribut *TreatZ.*

Dans chacune des applications, l'équipement émetteur dialogue avec un ou plusieurs équipements récepteurs sur le réseau de communication. Chaque équipement récepteur présente par exemple une fonction activable selon sa position géographique par rapport à la zone d'influence paramétrée dans l'équipement émetteur. Cette fonction peut être par exemple une commande d'envoi de données ou une commande d'allumage d'une lampe ou une demande de réponse à un message précis.

Deux modes de fonctionnement distincts peuvent se présenter. Dans le premier mode de fonctionnement, l'équipement émetteur 10 envoie un message de type "multicast" à destination des équipements avec lesquels il souhaite communiquer dans sa zone d'influence. Dans ce premier mode de fonctionnement, l'équipement destinataire peut comporter des moyens de détermination de sa position par rapport à la zone d'influence de l'équipement émetteur. Si l'équipement destinataire détermine que sa position géographique de référence *DevPos* ou instantanée *CurPos* se trouve dans la zone d'influence Z1 de l'équipement émetteur, il active la fonction définie par les attributs *MessID* et Mess du message provenant de l'équipement émetteur. Bien entendu, si l'équipement comporte plusieurs éléments répartis, il déterminera s'il est concerné par le message en tenant compte de la position de l'un de ses éléments, par exemple la position géographique du moteur électrique et non celle du contacteur électromécanique permettant de commander le moteur électrique.

Dans le deuxième mode de fonctionnement, l'équipement émetteur 10 envoie un message de type "unicast" à chacun des équipements qu'il souhaite commander. Dans ce deuxième mode de fonctionnement, l'équipement émetteur 10 peut déterminer lui-même quels équipements il souhaite adresser en sélectionnant leur identifiant. Ces équipements récepteurs seront présents ou non dans sa zone d'influence Z1.

Une première application peut concerner un système d'éclairage comportant un équipement émetteur tel qu'un interrupteur et plusieurs équipements récepteurs affectés chacun à la commande d'une lampe. Dans cette application, la zone d'influence sera par exemple une ou plusieurs pièces d'un bâtiment. Grâce à l'information liée à l'orientation de référence *DevOri* ou instantanée *CurOri* des équipements, il est possible de discriminer certains équipements présentant la même position géographique. Cela peut par exemple être le cas de deux interrupteurs montés de part et d'autre d'un mur mais destinés à commander deux lampes distinctes. Dans ce cas, la définition de la zone d'influence ne suffit pas pour les discriminer. En précisant dans l'information *AREA,* un attribut *AleaZ* et un *TreatZ,* il sera ainsi possible de ne garder que l'interrupteur dont l'orientation de référence ou instantanée pointe par exemple vers l'intérieur de la zone d'influence, c'est-à-dire vers l'intérieur de la pièce. Par ailleurs, l'emploi d'un message de type "multicast3" pourra par exemple permettre de sélectionner tous les équipements de type lampe qui éclairent en direction d'un point déterminé défini dans le message par l'information *PtDet.*

Une autre application peut concerner par exemple l'actionnement d'une pompe selon le niveau de liquide présent dans une cuve surveillée par une jauge. Il peut s'agit également de piloter des cassettes HVAC dans un bâtiment à l'aide d'une télécommande. Dans ce cas, la zone d'influence de l'équipement émetteur formé par la télécommande est par exemple un cône afin de pouvoir commander précisément une cassette en particulier. Une autre application peut concerner par exemple la commande de blocs d'éclairage de sécurité.

## Revendications

1. Procédé de communication entre un premier équipement (DEV) et un ou plusieurs autres équipements (DEV) destinataires mis en oeuvre à travers un réseau de communication (30), chaque équipement (DEV) parmi le premier équipement et les autres équipements mémorisant une position géographique instantanée (CurPos),
ledit procédé comportant une étape d'envoi d'un message par le premier équipement à chaque équipement destinataire, ledit message étant conforme à un protocole de communication déterminé et comportant une première information (*AREA*) définissant une zone d'influence (Z1),
ledit procédé étant **caractérisé en ce que** chaque équipement est identifié sur ledit réseau de communication (30) par un identifiant (ID) mémorisé comportant trois informations disctinctes que sont une position géographique de référence (DevPos), un type d'équipement (DevType) et un numéro d'instance (Devilnst), et
**en ce que** chaque équipement (DEV) mémorise également une durée (IDAssignTime) depuis la dernière mise à jour de son identifiant (ID) et une information de précision sur sa position géographique (LocAcc), et
**en ce que** ladite zone d'influence (Z1) correspond à une zone géographique déterminée par rapport à laquelle chaque équipement destinataire détermine s'il est concerné par ledit message à partir de sa position géographique de référence ou sa position géographique instantanée.

2. Procédé selon la revendication 1, ledit procédé comportant également une étape dans laquelle chaque équipement met automatiquement à jour son identifiant (ID) en cas de changement de sa position géographique.

3. Procédé selon la revendication 1 ou 2, dans lequel ladite première information définissant la zone d'influence (Z1) indique sa forme et sa taille.

4. Procédé selon l'une des revendications 1 à 3, dans lequel la première information (*AREA*) comporte un attribut (*AleaZ*) indiquant une incertitude de position par rapport à la zone d'influence.

5. Procédé selon la revendication 4, dans lequel la première information comporte un attribut (*TreatZ*) indiquant une orientation d'un équipement par rapport à la zone d'influence.

6. Procédé selon la revendication 4 ou 5, dans lequel le message comporte une deuxième information (*PtDet*) indiquant un point déterminé dans l'espace par rapport auquel chaque équipement destinataire du message détermine s'il est concerné par ledit message.

7. Procédé selon la revendication 6, dans lequel le message comporte une troisième information (*AngDev*) indiquant un angle de déviation par rapport aux orientations pointant sur le point déterminé (*PtDet*) dans l'espace.

8. Procédé selon l'une des revendications 1 à 7, dans lequel le protocole de communication comporte une fonction de découverte des équipements présents dans la zone d'influence.

9. Système de communication comportant un premier équipement (DEV) et un ou plusieurs autres équipements (DEV) destinataires connectés sur un réseau de communication (30),
chaque équipement (DEV) parmi le premier équipement et les autres équipements étant adapté pour mémoriser une position géographique instantanée (CurPos),
le premier équipement étant agencé pour employer un protocole de communication définissant un message envoyé par le premier équipement à un ou plusieurs des équipements destinataires,
ledit message comportant une première information (*AREA*) définissant une zone d'influence (Z1)
ledit système étant **caractérisé en ce que** chaque équipement parmi le premier équipement et les autres équipements est identifié sur ledit réseau de communication (30) par un identifiant (ID) comportant trois informations disctinctes que sont une position géographique de référence (DevPos), un type d'équipement (DevType) et un numéro d'instance (Devilnst), chaque équipement parmi le premier équipement et les autres équipements étant adapté pour mémoriser l'identifiant de chaque équipement parmi le premier équipement et les autres équipements, et
**en ce que** chaque équipement (DEV) mémorise également une durée (IDAssignTime) depuis la dernière mise à jour de son identifiant (ID), une information de précision sur sa position géographique (LocAcc), et
**en ce que** ledit système est adapté pour que ladite zone d'influence définisse une zone géographique et pour que chaque équipement destinataire détermine s'il est concerné par ledit message à partir de sa position géographique de référence ou sa position géographique instantanée.

10. Système selon la revendication 9, dans lequel chaque équipement est adapté pour mettre automatiquement à jour son identifiant (ID) en cas de changement de sa position géographique.

11. Système selon la revendication 9 ou 10, adapté pour que chaque identifiant (ID) comporte une information (*DevType*) correspondant au type d'équipement.

12. Système selon l'une des revendications 9 à 11, adapté pour que chaque équipement comporte des moyens de configuration d'une zone d'influence qu'il considère comme sa zone d'influence (Z1).

13. Système selon la revendication 12, adapté pour que les moyens de configuration comportent des moyens de dialogue homme machine situés sur l'équipement ou connectables à l'équipement.

14. Système selon l'une des revendications 9 à 13, adapté pour que la définition de la zone d'influence comprenne sa forme et sa taille.

## Patentansprüche

1. Verfahren zur Kommunikation zwischen einer ersten Anlage (DEV) und einer oder mehreren anderen Bestimmungsanlagen (DEV), das über ein Netzwerk (30) eingesetzt wird, wobei jede Anlage (DEV) unter der ersten Anlage und den anderen Anlagen eine momentane geografische Position (CurPos) speichert,
wobei das Verfahren einen Schritt des Sendens einer Nachricht durch die erste Anlage an jede Bestimmungsanlage umfasst,
wobei die Nachricht mit einem bestimmten Kommunikationsprotokoll konform ist und eine erste Information (AREA), die eine Einflusszone (Z1) definiert, umfasst,
wobei das Verfahren **dadurch gekennzeichnet ist, dass** jede Anlage in dem Netzwerk (30) durch einen gespeicherten Identifikator (ID) identifiziert ist, umfassend drei unterschiedliche Informationen, die eine geografische Referenzposition (DevPos), ein Anlagentyp (DevType) und eine Instanznummer (Devilnst) sind, und
dass jede Anlage (DEV) auch eine Dauer (IDAssignTime) seit der letzten Aktualisierung ihres Identifikators (ID) und eine Information zur genauen Angabe ihrer geografischen Position (LocAcc) speichert, und
dass die Einflusszone (Z1) einer bestimmten geografischen Zone entspricht, in Bezug auf die jede Bestimmungsanlage bestimmt, ob sie von der Nachricht ausgehend von ihrer geografischen Referenzposition oder ihrer momentanen geografischen Position betroffen ist.

2. Verfahren nach Anspruch 1, wobei das Verfahren auch einen Schritt umfasst, in dem jede Anlage ihren Identifikator (ID) im Falle einer Änderung ihrer geografischen Position automatisch aktualisiert.

3. Verfahren nach Anspruch 1 oder 2, bei dem die erste Information, die die Einflusszone (Z1) definiert, ihre Form und ihre Größe angibt.

4. Verfahren nach einem der Ansprüche 1 bis 3, bei dem die erste Information (AREA) ein Attribut (AleaZ) umfasst, das eine Positionsunsicherheit in Bezug auf die Einflusszone angibt.

5. Verfahren nach Anspruch 4, bei dem die erste Information ein Attribut (TreatZ) umfasst, das eine Ausrichtung einer Anlage in Bezug auf die Einflusszone angibt.

6. Verfahren nach Anspruch 4 oder 5, bei dem die Nachricht eine zweite Information (PtDet) umfasst, die einen bestimmten Punkt im Raum angibt, in Bezug auf den jede Bestimmungsanlage der Nachricht bestimmt, ob sie von der Nachricht betroffen ist.

7. Verfahren nach Anspruch 6, bei dem die Nachricht eine dritte Information (AngDev) umfasst, die einen Abweichungswinkel in Bezug auf die Ausrichtungen, die auf den bestimmten Punkt (PtDet) im Raum zeigen, angibt.

8. Verfahren nach einem der Ansprüche 1 bis 7, bei dem das Kommunikationsprotokoll eine Funktion der Erfassung der in der Einflusszone vorhandenen Anlagen umfasst.

9. Kommunikationssystem, umfassend eine erste Anlage (DEV) und eine oder mehrere andere Bestimmungsanlagen (DEV), die an ein Netzwerk (30) angeschlossen sind,
wobei jede Anlage (DEV) unter der ersten Anlage und den anderen Anlagen geeignet ist, eine momentane geografische Position (CurPos) zu speichern, wobei die erste Anlage eingerichtet ist, um ein Kommunikationsprotokoll zu verwenden, das eine von der ersten Anlage an eine oder mehrere der Bestimmungsanlagen gesandte Nachricht definiert,
wobei die Nachricht eine erste Information (AREA), die eine Einflusszone (Z1) definiert, umfasst,
wobei das System **dadurch gekennzeichnet ist, dass** jede Anlage unter der ersten Anlage und den anderen Anlagen in dem Netzwerk (30) durch einen Identifikator (ID) identifiziert ist, umfassend drei unterschiedliche Informationen, die eine geografische Referenzposition (DevPos), ein Anlagentyp (DevType) und eine Instanznummer (Devilnst) sind, wobei jede Anlage unter der ersten Anlage und den anderen Anlagen geeignet ist, den Identifikator jeder Anlage unter der ersten Anlage und den anderen Anlagen zu speichern, und
dass jede Anlage (DEV) auch eine Dauer (IDAssignTime) seit der letzten Aktualisierung ihres Identifikators (ID), eine Information zur genauen Angabe ihrer geografischen Position (LocAcc) speichert, und
dass das System eingerichtet ist, dass die Einflusszone eine bestimmte geografische Zone definiert, und dass jede Bestimmungsanlage bestimmt, ob sie von der Nachricht ausgehend von ihrer geografischen Referenzposition oder ihrer momentanen geografischen Position betroffen ist.

10. System nach Anspruch 9, bei dem jede Anlage eingerichtet ist, um ihren Identifikator (ID) im Falle einer Änderung ihrer geografischen Position automatisch zu aktualisieren.

11. System nach Anspruch 9 oder 10, das eingerichtet ist, dass jeder Identifikator (ID) eine Information (DevType) entsprechend dem Anlagentyp umfasst.

12. System nach einem der Ansprüche 9 bis 11, das eingerichtet ist, dass jede Anlage Mittel zur Konfiguration einer Einflusszone, die sie als ihre Einflusszone (Z1) betrachtet, umfasst.

13. System nach Anspruch 12, das eingerichtet ist, dass die Konfigurationsmittel Mensch-Maschine-Dialogmittel umfassen, die auf der Anlage angeordnet oder an die Anlage anschließbar sind.

14. System nach einem der Ansprüche 9 bis 13, das eingerichtet ist, dass die Definition der Einflusszone ihre Form und ihre Größe umfasst.

## Claims

1. A method of communication between a first device (DEV) and one or more other destination devices (DEV) implemented via a communication network (30), each device (DEV) amongst the first device and the other devices storing a current geographical position (CurPos), said method comprising a step in which the first device transmits a message to each destination device, said message conforming to a given communication protocol and comprising a first piece of information *(AREA)* defining a zone of influence (Z1), said method being **characterized in that** each device is identified in said communication network (30) by a stored identifier (ID) comprising three separate pieces of information, namely a reference geographical position (DevPos), a type of device (DevType), and a device number (Devlnst) and **in that** each device also stores a length of time (IDAssignTime) since its identifier (ID) was last updated, as well as information on the accuracy of its geographical position (LocAcc), and **in that** said zone of influence (Z1) corresponds to a given geographical zone with respect to which each destination device determines whether it is concerned by said message, based on its reference geographical position or its current geographical position.

2. The method as claimed in claim 1, said method also comprising a step in which each device automatically updates its identifier (ID) if its geographical position changes.

3. The method as claimed in either of claims 1 and 2, in which said first piece of information defining the zone of influence (Z1) indicates its shape and size.

4. The method as claimed in one of claims 1 to 3, in which the first piece of information *(AREA)* comprises a data item (*AleaZ*) indicating a positional uncertainty with respect to the zone of influence.

5. The method as claimed in claim 4, in which the first piece of information comprises a data item (*TreatZ*) indicating an orientation of a device with respect to the zone of influence.

6. The method as claimed in either of claims 4 and 5, in which the message comprises a second piece of information *(PtDet)* indicating a given point in space with respect to which each device to which a message is directed determines whether it is concerned by said message.

7. The method as claimed in claim 6, in which the message comprises a third piece of information (*AngDev*) indicating an angular deviation with respect to orientations pointing to the given point *(PtDet)* in space.

8. The method as claimed in one of claims 1 to 7, in which the communication protocol comprises a function for discovering the devices present in the zone of influence.

9. A communication system comprising a first device (DEV) and one or more other destination devices (DEV) connected in a communication network (30), each device (DEV) amongst the first device and the other devices, being adapted to store a current geographical position (CurPos), the first device being designed to employ a communication protocol defining a message transmitted by the first device to one or more of the destination devices, said message comprising a first piece of information *(AREA)* defining a zone of influence (Z1), said system being **characterized in that** each device, amongst the first device and the other devices, is identified in said communication network (30) by an identifier (ID) comprising three separate pieces of information, namely a reference geographical position (DevPos), a type of device (DevType), and a device number (Devlnst), each device amongst the first device and the other devices being adapted to store the identifier of each device amongst the first device and the other devices, and **in that** each device also stores a length of time (IDAssignTime) since its identifier (ID) was last updated, information on the accuracy of its geographical position (LocAcc), and **in that** said system is adapted so that said zone of influence defines a geographical zone and so that each destination device determines whether it is concerned by said message, based on its reference geographical position or its current geographical position.

10. The system as claimed in claim 9, in which each device is adapted to automatically updates its identifier (ID) if its geographical position changes.

11. The system as claimed in either of claims 9 and 10, being adapted so that each identifier (ID) comprises a piece of information (*DevType*) corresponding to the type of device.

12. The system as claimed in one of claims 9 to 11, being adapted so that each device comprises means for configuring a zone of influence it considers as its zone of influence (Z1).

13. The system as claimed in claim 12, being adapted so that the configuring means comprise human machine interface means located on the device or that can be connected to the device.

14. The system as claimed in one of claims 9 to 13, being adapted so that the definition of the zone of influence includes its shape and size.
